# EUROPEAN PATENT APPLICATION

(11) **EP 4 783 345 A1**
(43) Date of publication of application: **29.07.2026**
(21) Application number: 24867250.3
(22) Date of filing: 28.08.2024
(51) Int. Cl.: H01M 50/449, H01M 50/451, H01M 50/454, H01M 50/457, H01M 50/446, H01M 50/44, H01M 50/431, H01M 50/403, H01M 50/489, H01M 10/0525

(54) **COMPOSITE COATED SEPARATOR AND PREPARATION METHOD THEREFOR, AND LITHIUM-ION BATTERY COMPRISING SAME**

(30) Priority: 21.09.2023 CN 202311219101
(71) Applicant: Sinoma Lithium Battery Separator Co., Ltd., Zaozhuang, Shandong 277500 (CN); China National Building Material Group Co., Ltd., Beijing 100036 (CN)
(72) Inventor: YAN, Tingguo, Zaozhuang, Shandong 277500 (CN); LIU, Gaojun, Zaozhuang, Shandong 277500 (CN); BAI, Yaozong, Zaozhuang, Shandong 277500 (CN); ZHENG, Lei, Zaozhuang, Shandong 277500 (CN); MA, Pingchuan, Zaozhuang, Shandong 277500 (CN); GAO, Feifei, Zaozhuang, Shandong 277500 (CN); DONG, Qiuchun, Zaozhuang, Shandong 277500 (CN); SHENG, Lei, Zaozhuang, Shandong 277500 (CN); LI, Yadi, Zaozhuang, Shandong 277500 (CN)
(74) Representative: Huang, Liwei
(86) International application number: PCT/CN2024/114999
(87) International publication number: WO 2025/060836

(57) **Abstract**

A composite coated separator and a preparation method therefor, and a lithium-ion battery comprising same. The composite coated separator comprises a substrate film and a coating layer formed on at least one surface of the substrate film, wherein the coating layer comprises aramid fibers and an inorganic filler, the inorganic filler is filled into a three-dimensional network structure formed by the aramid fibers, and a filling ratio of the coating layer is 80-98%, the filling ratio of the coating layer being equal to 100%×(1-area of the inorganic filler exposed on the surface of the coating layer/area of the coating layer). In the composite coated separator, the filling ratio of the inorganic filler in the coating layer is appropriate, and the coating layer has the characteristics of high temperature resistance, Gurley gas permeability value and low tendency for powder shedding.

## Description

### TECHNICAL FIELD

The present disclosure relates to the field of lithium-ion batteries, in particular to a composite coated separator for lithium-ion batteries and a preparation method for the composite coated separator.

### BACKGROUND

A separator is a key component of a lithium-ion battery and mainly plays the roles of lithium ion pathways and electronic insulation. Polyolefins (such as PE and PP) are main materials used in commercial lithium-ion battery separators at present. Although they exhibit certain advantages such as chemical stability, mechanical properties and cost, with the continuous penetration of lithium-ion batteries in the field of electric vehicles, the shortcomings of polyolefin in high temperature resistance and wettability with electrolytes have become increasingly prominent, which seriously reduces the safety performance of lithium-ion batteries, and especially hinders their application in power batteries.

A common method to solve the above problems is to coat one surface or both surfaces of a polyolefin substrate film with a high-temperature-resistant and electrolyte-wettable coating, and a coating material is mainly an inorganic material or an organic polymer. The hybrid coating of the above inorganic and organic materials can make the separator have both high temperature resistance and electrolyte wettability, but the Gurley gas permeability value, high temperature resistance and powder shedding resistance of the coating directly affect the performance of the separator. Therefore, research on separator coating layers is of great significance.

### SUMMARY

A main object of the present disclosure is to provide a composite coated separator and a preparation method therefor, and a lithium-ion battery including the same, so as to solve the problems that a coating layer cannot achieve a balance among high temperature resistance, Gurley gas permeability value and powder shedding resistance in the prior art. The inventors have found that when a coating layer is formed by mixing aramid fibers with an inorganic filler, and a filling ratio of the coating layer is in a specific range, a coated separator with wellbalanced high temperature resistance, Gurley gas permeability value and powder shedding resistance can be obtained.

Specific solutions are as follows:
Provided is a composite coated separator, including a substrate film and a coating layer formed on at least one surface of the substrate film, wherein the coating layer includes aramid fibers and an inorganic filler, the inorganic filler is filled into a three-dimensional network structure formed by the aramid fibers, and a filling ratio of the coating layer is 80-98%, the filling ratio of the coating layer being equal to 100%×(1-area of the inorganic filler exposed on the surface of the coating layer/area of the coating layer).

According to the composite coated separator of the present disclosure, in one embodiment, an increase in Gurley gas permeability value contributed by per unit thickness of the coating layer is less than 35 s/100 cc/µm; after being hold at 120°C for 1 h, the composite coated separator exhibits a thermal shrinkage rate in a machine direction (MD) of less than 5%, and a thermal shrinkage rate in a transverse direction (TD) of less than 1%, and has a powder shedding rate of less than 0.5%.

According to the composite coated separator of the present disclosure, in one embodiment, the substrate film has a thickness of 4-20 µm, a Gurley gas permeability value of 50-500s/100cc, and a porosity of 40-55%; and the coating layer has a thickness of 1-4 µm.

According to the composite coated separator of the present disclosure, in one embodiment, the inorganic filler is at least one selected from a ceramic material, a nanowire material or a nanotube material; the ceramic material is one or more selected from Al₂O₃, SiO₂, TiO₂, ZrO₂, BaTiO₃, MgO, CaO, AlOOH, and SiC; the nanowire material is one or more selected from carbon nanowires, attapulgite, silver nanowires, boron carbide nanowires, nanocellulose, copper hydroxide nanowires, silicon monoxide nanowires and hydroxyapatite nanowires; and the nanotube material is one or more selected from carbon nanotubes, silver nanotubes, boron carbide nanotubes, copper hydroxide nanotubes, silicon monoxide nanotubes, and hydroxyapatite nanotubes.

According to the composite coated separator of the present disclosure, in one embodiment, the inorganic filler is inorganic particles having hydroxyl functional groups on the surface; and the inorganic filler has a particle diameter of 0.01-0.5 µm.

Provided is a composite coated separator, including a substrate film and a coating layer formed on at least one surface of the substrate film, wherein a slurry for forming the coating layer comprises an aramid dope and the inorganic filler, and the aramid dope has a rotary viscosity of 2000-4000 mPa·s.

According to the composite coated separator of the present disclosure, in one embodiment, the slurry for forming the coating layer has a solid content of 4-5 wt%; and the aramid dope includes at least one selected from poly(m-phenylene isophthalamide) and poly(p-phenylene terephthalamide), and a solvent, the solvent being N-methylpyrrolidone.

According to the composite coated separator of the present disclosure, in one embodiment, the aramid dope further includes an auxiliary agent, the auxiliary agent is one or more selected from CaCl₂, KOH, LiCl and pyridine, and the mass content of the auxiliary agent in the aramid dope is 10% or less.

Provided is a preparation method for the composite coated separator, including the steps of:
blending an inorganic filler with an organic solvent, performing first high-speed dispersion, then mixing the dispersed mixture with an aramid dope, and performing second high-speed dispersion to obtain a slurry for forming a coating layer, wherein the aramid dope has a rotary viscosity of 2000-4000 mPa·s, the slurry for forming the coating layer has a solid content of 4-5 wt%, and the first high-speed dispersion is performed at a rotational speed of 6500-10000 r/min for 10-60 min; and the second high-speed dispersion is performed at a rotational speed of 6500-10000 r/min for 10-60 min, and the rotational speed of the first high-speed dispersion is the same as the rotational speed of the second high-speed dispersion; and
coating one surface or both surfaces of a substrate film with the slurry to obtain the composite coated separator.

According to the preparation method for the composite coated separator, in one embodiment, the organic solvent is N-methylpyrrolidone.

Provided is a lithium-ion battery, including the composite coated separator or a composite coated separator prepared by the preparation method.

The beneficial effects of the present disclosure are as follows:

The present disclosure provides the composite coated separator, the filling ratio of the coating layer is appropriate, and the coating layer has the characteristics of high temperature resistance, Gurley gas permeability value and low tendency for powder shedding.

### BRIEF DESCRIPTION OF DRAWINGS

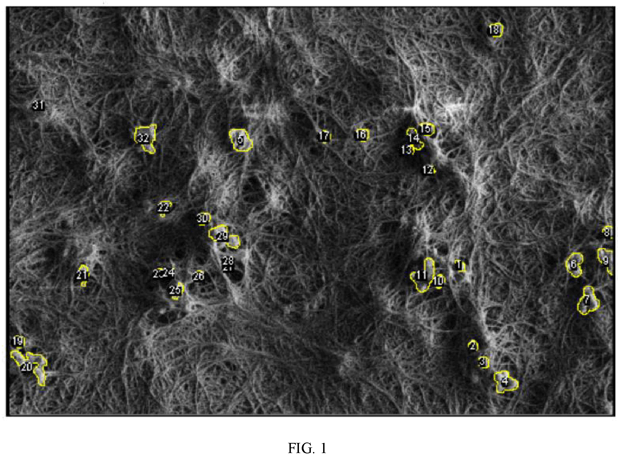

FIG. 1 is a schematic diagram showing regions where an inorganic material on the surface is located, selected from an SEM photograph of a coating layer in Example 1 by using the manual selection function of imageJ software.

An actual area of the field of view shown in FIG. 1 is 1024 µm×692 µm.

1-32 exemplarily show regions where the inorganic material on the surface is located, respectively selected from the SEM photograph of the coating layer in Example 1 by using the manual selection function of imageJ software.

### DETAILED DESCRIPTION

Hereinafter, the technical solutions of the present disclosure will be described in detail. The following embodiments are implemented on the premise of the technical solutions of the present disclosure, and detailed implementation procedures are given, but the scope of protection of the present disclosure is not limited to the following embodiments, and the structures or experimental methods for which specific conditions are not indicated in the following embodiments are generally performed according to conventional conditions.

The present disclosure provides a composite coated separator, including a substrate film and a coating layer formed on at least one surface of the substrate film, wherein the coating layer includes aramid fibers and an inorganic filler, the inorganic filler is filled into a three-dimensional network structure formed by the aramid fibers, and a filling ratio of the coating layer is 80-98%, the filling ratio of the coating layer being equal to 100%×(1-area of the inorganic filler exposed on the surface of the coating layer/area of the coating layer).

In the present disclosure, the aramid fibers are mixed with an inorganic material to form the coating layer, and when the filling ratio of the coating layer is in a specific range, the coated separator having high temperature resistance, Gurley gas permeability value and powder shedding resistance can be obtained.

A material of the substrate film is not particularly limited in the present disclosure. For example, the substrate film is made of polyolefin (such as PE and PP) or may be a substrate film having a coating. A thickness of the substrate film is not particularly limited in the present disclosure, and is, for example, 4-20 µm, preferably 12-14 µm; and the Gurley gas permeability value is, for example, 50-500s/100cc, and the porosity is 40-55%. Those skilled in the art can prepare the substrate film of the present disclosure according to the prior art.

In the present disclosure, the coating layer coats one surface or both surfaces of the substrate film, that is, the separator of the present disclosure may include one coating layer coating one surface of the substrate film, or may include two coating layers respectively coating both surfaces of the substrate film, which is not particularly limited in the present disclosure.

In one embodiment, the aramid fibers of the present disclosure include at least one selected from poly(m-phenylene isophthalamide) (aramid 1313) and poly(p-phenylene terephthalamide) (aramid 1414, aramid II).

In one embodiment, the inorganic filler of the present disclosure is selected from a ceramic material, a nanowire material, or a nanotube material, and the ceramic material may be selected from one or a combination of more of Al₂O₃, SiO₂, TiO₂, ZrO₂, BaTiO₃, MgO, CaO, AlOOH, and SiC; the nanowire material may be one or more selected from carbon nanowires, attapulgite, silver nanowires, boron carbide nanowires, nanocellulose, copper hydroxide nanowires, silicon monoxide nanowires, and hydroxyapatite nanowires; the nanotube material may be one or more selected from carbon nanotubes, silver nanotubes, boron carbide nanotubes, copper hydroxide nanotubes, silicon monoxide nanotubes, and hydroxyapatite nanotubes; and the inorganic filler has a particle diameter of 0.2-0.5 µm, and is preferably an inorganic filler having hydroxyl functional groups on the surface, and is, for example, inorganic particles.

In one embodiment, the coating layer of the present disclosure has a thickness of 1-4 µm, and an increase in Gurley gas permeability value contributed by per unit thickness of the coating layer is less than 35 s/100 cc/µm; and after being hold at 120°C for 1 h, the composite coated separator exhibits a thermal shrinkage rate in a machine direction (MD) of less than 5%, and a thermal shrinkage rate in a transverse direction (TD) of less than 1%, and has a powder shedding rate of less than 0.5%.

The present disclosure also provides a composite coated separator, including a substrate film and a coating layer formed on at least one surface of the substrate film, wherein a slurry for forming the coating layer includes an aramid dope and an inorganic filler, and the aramid dope has a rotary viscosity of 2000-4000 mPa·s.

In the present disclosure, by limiting the rotary viscosity of the aramid dope, the obtained coating layer can have better porosity and enhanced Gurley gas permeability value. Therefore, the composite coated separator of the present disclosure has excellent physical properties.

A material of the substrate film is not particularly limited in the present disclosure. For example, the substrate film is made of polyolefin (such as PE and PP) or may be a substrate film having a coating. A thickness of the substrate film is not particularly limited in the present disclosure, and is, for example, 4-20 µm, preferably 12-14 µm; and the Gurley gas permeability value is, for example, 50-500s/100cc, and the porosity is 40-55%. Those skilled in the art can prepare the substrate film of the present disclosure according to the prior art.

In the present disclosure, the coating layer coats one surface or both surfaces of the substrate film, that is, the separator of the present disclosure may include one coating layer coating one surface of the substrate film, or may include two coating layers respectively coating both surfaces of the substrate film, which is not particularly limited in the present disclosure.

In the present disclosure, the slurry for forming the coating layer includes the aramid dope and the inorganic filler. Of course, the slurry contains a solvent which may be derived from the aramid dope or may be added separately. In one embodiment, the inorganic filler is pre-dispersed in the solvent, then the dispersed mixture is mixed with the aramid dope, and dispersion is performed again. In one embodiment, a rotational speed of pre-dispersion of the inorganic filler in the solvent is 6500-10000 r/min, and a rotational speed of dispersion of a mixed solution of the inorganic filler and the aramid dope is 6500-10000 r/min. The pre-dispersion of the inorganic filler and the dispersion of the mixed solution of the inorganic filler and the aramid dope are performed within the rotational speed range, so that the obtained coating layer can have high temperature resistance, and low tendency for powder shedding. In another embodiment, the solvent is N-methylpyrrolidone (NMP).

In the present disclosure, the rotary viscosity of the aramid dope is 2000-4000 mPa·s, so that the porosity of the coating layer is better, and the Gurley gas permeability value of the coating layer per unit thickness is good.

In one embodiment, the aramid dope of the present disclosure includes at least one selected from poly(m-phenylene isophthalamide) (aramid 1313) and poly(p-phenylene terephthalamide) (aramid 1414, aramid II), and a solvent such as N-methylpyrrolidone (NMP). Thus, at least one selected from poly(m-phenylene isophthalamide) (aramid 1313) and poly(p-phenylene terephthalamide) (aramid 1414, aramid II) is dissolved in the solvent to form a yellow transparent and uniform liquid.

In another embodiment, the aramid dope further contains an auxiliary agent, the auxiliary agent is, for example, one or more selected from CaCl₂, KOH, LiCl, and pyridine, and the mass content of the auxiliary agent is 10% or less.

The aramid dope with different rotary viscosities of the present disclosure may be commercially available, which is not particularly limited in the present disclosure.

In one embodiment, the inorganic filler of the present disclosure is selected from a ceramic material, a nanowire material, or a nanotube material, and the ceramic material may be selected from one or a combination of more of Al₂O₃, SiO₂, TiO₂, ZrO₂, BaTiO₃, MgO, CaO, AlOOH, and SiC; the nanowire material may be one or more selected from carbon nanowires, attapulgite, silver nanowires, boron carbide nanowires, nanocellulose, copper hydroxide nanowires, silicon monoxide nanowires, and hydroxyapatite nanowires; the nanotube material may be one or more selected from carbon nanotubes, silver nanotubes, boron carbide nanotubes, copper hydroxide nanotubes, silicon monoxide nanotubes, and hydroxyapatite nanotubes; and the inorganic filler has a particle diameter of 0.2-0.5 µm, and is preferably an inorganic filler having hydroxyl functional groups on the surface, and is, for example, inorganic particles.

In the present disclosure, the slurry for forming the coating layer has a solid content of 4-5 wt%, so that the coating layer has good high temperature resistance, and low tendency for powder shedding. If the solid content of the slurry for forming the coating layer is too high, the coating layer will be excessively thick, and problems such as sagging and wrinkling will easily occur, and energy consumption and production cost will also be increased; and if the solid content of the slurry for forming the coating layer is too low, the coating layer may be thin, affecting the performance and service life of the coating layer. If the solid content of the slurry is too low, the high temperature resistance of the coating layer will be poor; and if the solid content of the slurry is too high, the Gurley gas permeability value of the coating layer will be poor.

In one embodiment, a filling ratio of the coating layer of the present disclosure is 80-98%. The filling ratio of the coating layer is equal to 100%×(1-area of the inorganic material exposed on the surface of the coating layer/area of the coating layer). In the present disclosure, by simultaneously regulating and controlling the rotary viscosity of the aramid dope and the solid content of the slurry for forming the coating layer, and controlling a speed of first high-speed dispersion (dispersion of the inorganic filler in the solvent) and a speed of second high-speed dispersion (dispersion of the inorganic filler in the aramid dope) to be the same within a specific range, a composite coated separator with a filling ratio of 80-98% is obtained, thus achieving a balance among Gurley gas permeability value, high temperature resistance and a powder shedding rate. If the filling ratio of the coating layer is too low, the coating layer is prone to defects such as powder shedding and poor Gurley gas permeability value; and if the filling ratio of the coating layer is too high, the high temperature resistance of the coating layer is poor.

The present disclosure also provides a preparation method for the composite coated separator, including the steps of:
blending an inorganic filler with an organic solvent, performing first high-speed dispersion, then mixing the dispersed mixture with an aramid dope, and performing second high-speed dispersion to obtain a slurry for forming a coating layer, wherein the aramid dope has a rotary viscosity of 2000-4000 mPa·s, the slurry for forming the coating layer has a solid content of 4-5 wt%, and the first high-speed dispersion is performed at a rotational speed of 6500-10000 r/min for 10-60 min; and the second high-speed dispersion is performed at a rotational speed of 6500-10000 r/min for 10-60 min, and the rotational speed of the first high-speed dispersion is the same as the rotational speed of the second high-speed dispersion; and
coating one surface or both surfaces of a substrate film with the slurry to obtain the composite coated separator.

The present disclosure does not specifically limit a preparation method for the substrate film, and conventional preparation methods in the art can be used.

In the present disclosure, the inorganic filler is first blended with the solvent. The inorganic filler has been described in detail above and will not be described in detail here. In one embodiment, the solvent is an organic solvent, such as N-methylpyrrolidone (NMP). A mixture of the inorganic filler and the solvent is subjected to first high-speed dispersion at a rotational speed of 6500-10000 r/min for 10-60 min. The rotational speed of the first high-speed dispersion is the same as the rotational speed of the second high-speed dispersion.

Then, the dispersed mixture of the inorganic filler and the solvent is mixed with the aramid dope. The aramid dope has been described in detail above and will not be described again here. In one embodiment, a mass ratio of the inorganic filler to the aramid dope is (1-6):25, specifically, 4:25, and a mass ratio of the aramid fibers to the solvent in the aramid dope is (1-3):45, specifically, 1:45. A mixture of the inorganic filler and the aramid dope is subjected to second high-speed dispersion at a rotational speed of 6500-10000 r/min for 10-60 min. The rotational speed of the first high-speed dispersion may be the same as the rotational speed of the second high-speed dispersion.

In the present disclosure, by defining the rotational speed of the high-speed dispersion to be 6500-10000 r/min, the resulting coating layer has low tendency for powder shedding. If the rotational speed of the dispersion is too low, there will be large agglomerates and aggregates in the slurry for forming the coating layer, which will affect the subsequent processing and performance, so that the filling ratio of the coating layer is too low, and the coating layer has low tendency for powder shedding; and on the contrary, if the rotational speed of the dispersion is too high, the slurry may be excessively sheared, leading to damage of its internal structure, degradation of its stability and rheological properties, an excessively high filling ratio of the coating layer, and poor high temperature resistance of the coating layer. The rotational speed of the first high-speed dispersion is the same as the rotational speed of the second high-speed dispersion, which is beneficial to the stability control of the slurry, and if the rotational speeds are different, the stability of the slurry is deteriorated, and the powder shedding rate of the coating layer is increased.

Generally, a blade coating method, a gravure roll coating method, and a slot-die coating method typically require a rotational speed of high-speed dispersion of the slurry to be in the range of 5000-10000 r/min. In the present disclosure, the rotational speed of the high-speed dispersion is 6500-10000 r/min, thereby satisfying the dispersion requirements of the slurry for the blade coating method, the gravure roll coating method, and the slot-die coating method.

Generally, the blade coating method, the gravure roll coating method, and the slot-die coating method typically require the solid content of the slurry to be 3-5 wt%. In the present disclosure, the solid content of the slurry is 4-5 wt%, thus meeting the requirements of the blade coating method, the gravure roll coating method, and the slot-die coating method for the solid content of the slurry.

Therefore, in the composite coated separator of the present disclosure, a ceramic filling ratio of the coating layer is suitable, and the coating layer has the characteristics of high temperature resistance, Gurley gas permeability value and low tendency for powder shedding, and has excellent performance.

Hereinafter, the technical solutions of the present disclosure will be further described by specific examples. Unless otherwise specified, the following "%" refers to a percentage by weight.

Raw materials:
commercially available aramid dope with different rotary viscosities.

### Test method:

### (1) Test method for powder shedding rate

100 coated separators of 10 cm×10 cm were cut and vacuum dried at 60°C for 12 hours, and a total weight was weighed as G1, the above coated separators were respectively immersed and rinsed in propylene carbonate (PC), and washed with pure water and absolute ethanol in sequence, and the 100 separators were vacuum dried at 60°C for 12 hours, and a total weight was weighed as G2, and a powder shedding rate=(G1-G2)/G1×100%. (Reference: Xiao Qiong, Li Lianhong, Wang Xianyou. Preparation method for positive electrode sheet for lithium iron phosphate power battery [P]. Hubei: CN105720267A, 2016-06-29)

### (2) Filling ratio of the coating layer

A coverage rate of the inorganic material on the surface of the coating layer is obtained by processing with imageJ software, and then the filling ratio of the coating layer is obtained. Since the inorganic material is usually distributed on the surface of the coating layer in a single layer and its area is smaller than an area of the coating layer in an experiment, the filling ratio of the coating layer can be indirectly evaluated based on the inorganic material exposed on the surface.

Test method for a coverage rate of the inorganic material exposed on the surface of the coating layer: regions where the inorganic material on the surface is located were respectively selected from an SEM photograph of the coating layer by using the manual selection function of imageJ software (as shown in FIG. 1), the selected regions were added to ROI Manager, an area of each selected region was calculated by using the measure function, and the coverage rate of the inorganic material exposed on the surface of the coating layer was obtained by calculating a ratio of the sum of areas of all selected regions (i.e., an area of the inorganic material exposed on the surface of the coating layer) to a total area of the field of view (i.e., the area of the coating layer), and then the filling ratio of the coating layer was obtained.

The filling ratio of the coating layer is equal to 100%×(1-area of the inorganic material exposed on the surface of the coating layer/area of the coating layer).

### (3) Test method for thermal shrinkage:

A test was performed according to the requirements of GB/T 36363-2018, and a sample of 100 mm×100 mm was taken from a composite coated separator and was placed in a blast oven to stand at 120°C for 1 hour, and a thermal shrinkage rate can be obtained by the following formula.

MD thermal shrinkage rate (%)=|(MD length before heating-MD length after heating)÷MD length before heating|×100

TD thermal shrinkage rate (%)=|(TD length before heating-TD length after heating)÷TD length before heating|×100

### (4) Test method of Gurley gas permeability value:

Increase in Gurley gas permeability value contributed by per unit thickness of the coating layer=(Gurley gas permeability value of the entire coated separator after coating-Gurley gas permeability value of the substrate film)/thickness of the coating layer.

The Gurley gas permeability value can be tested according to a method specified in GB/1038.

### Example 1

8 g of Al₂O₃ inorganic filler with a particle size of 0.3 µm was mixed with 50 mL of N-methylpyrrolidone (NMP), the obtained mixture was subjected to high-speed dispersion at a rotational speed of 8500 rpm for 30 min, then the mixed solution was mixed with 200 g of aramid dope with a rotary viscosity of 3000 mPa·s, and dispersion was continued to be performed at the rotational speed of the above high-speed dispersion for 30 min to obtain a slurry with a solid content of 4.65%. The slurry (a coating layer has a thickness of 3 µm) coated the surface of a 13.5 µm substrate film by using a gravure roller, a filling ratio of the coating layer was measured, and the Gurley gas permeability value, thermal shrinkage performance, and powder shedding rate of the coating layer were tested.

According to the preparation method in Example 1, the composite coated separators in Examples 2-14 and Comparative examples 1-9 were prepared, and the values of variables and the obtained test results in the Examples and Comparative examples are shown in Table 1.

**Table 1**

| | Rotary viscosity of aramid dope (mPa·s) | Solid content of slurry (%) | Rotational speed | Increase in Gurley gas permeability value contributed by per unit thickness of the coating layer (s/100cc/1µm) | Thermal shrinkage (%, 130°C, 1 h) | | Powder shedding rate | Filling ratio (%) |
|---|---|---|---|---|---|---|---|---|
| | | | | | MD | TD | | |
| Example 1 | 3000 | 4.65 | 8500 | 30 | 2.3 | 0.8 | 0 | 97.8 |
| Example 2 | 2500 | 4.7 | 10000 | 25 | 3.4 | 1 | 0 | 98.0 |
| Example 3 | 3000 | 4 | 8500 | 29 | 5.0 | 0.9 | 0.3% | 98.7 |
| Example 4 | 3500 | 4.65 | 9400 | 35 | 2.3 | 0.8 | 0.1% | 88.9 |
| Example 5 | 4000 | 4.2 | 6500 | 30 | 4.4 | 0.8 | 0 | 94.6 |
| Example 6 | 2000 | 5 | 7500 | 35 | 1.2 | 1 | 0 | 90.5 |
| Example 7 | 2000 | 4 | 6500 | 30 | 1.9 | 0.9 | 0.4% | 81.0 |
| Example 8 | 2000 | 4 | 10000 | 25 | 4.9 | 1 | 0.1% | 95.3 |
| Example 9 | 2000 | 5 | 6500 | 34 | 1.2 | 0.8 | 0.5% | 84.0 |
| Example 10 | 2000 | 5 | 10000 | 30 | 3.7 | 1 | 0 | 97.2 |
| Example 11 | 4000 | 4 | 6500 | 33 | 1.3 | 1 | 0 | 87.9 |
| Example 12 | 4000 | 5 | 6500 | 35 | 1.0 | 0.8 | 0.2% | 80.0 |
| Example 13 | 4000 | 4 | 10000 | 26 | 5.0 | 0.9 | 0 | 96.6 |
| Example 14 | 4000 | 5 | 10000 | 30 | 4.7 | 0.9 | 0 | 93.4 |
| Comparative example 1 | 3000 | 5.5 | 8500 | 65 | 4.3 | 0.9 | 0.4% | 77.2 |
| Comparative example 2 | 3000 | 4.65 | 4000 | 35 | 1.2 | 0.7 | 1.5% | 65.9 |
| Comparative example 3 | 3000 | 4.65 | 13000 | 28 | 5.9 | 1.1 | 0 | 99.0 |
| Comparative example 4 | 4000 | 5.5 | 10000 | 58 | 2.5 | 0.9 | 0.2% | 75.5 |
| Comparative example 5 | 3000 | 3.55 | 8500 | 27 | 6.9 | 1.2 | 0.2% | 78.1 |
| Comparative example 6 | 6000 | 5 | 10000 | 70 | 4.7 | 1.1 | 0.1% | 75.8 |
| Comparative example 7 | 6000 | 4.65 | 8500 | 59 | 1.0 | 0.7 | 0.5% | 79.5 |
| Comparative example 8 | 1000 | 4.65 | 8500 | 62 | 4.8 | 1 | 1.3% | 71.3 |
| Comparative example 9 | 1000 | 3.55 | 13000 | 40 | 5.7 | 1.3 | 0.1% | 78.9 |

As shown in Table 1, when the rotary viscosity of the aramid dope, the solid content of the slurry and the rotational speed are all within specific ranges, the filling ratio is controlled within 80-98%, and it is found that when the filling ratio is within 80-98%, the three properties of high temperature resistance, Gurley gas permeability value and powder shedding rate are balanced.

Of course, the present disclosure may also have various other embodiments, and those skilled in the art may make various corresponding changes and modifications according to the present disclosure without departing from the spirit and essence of the present disclosure, but these corresponding changes and modifications should all fall within the scope of protection of the claims of the present disclosure.

## Claims

1. A composite coated separator, comprising a substrate film and a coating layer formed on at least one surface of the substrate film, wherein the coating layer comprises aramid fibers and an inorganic filler, the inorganic filler is filled into a three-dimensional network structure formed by the aramid fibers, and a filling ratio of the coating layer is 80-98%, the filling ratio of the coating layer being equal to 100%×(1-area of the inorganic filler exposed on the surface of the coating layer/area of the coating layer), wherein an increase in Gurley gas permeability value contributed by per unit thickness of the coating layer is less than 35 s/100 cc/µm; after being hold at 120°C for 1 h, the composite coated separator exhibits a thermal shrinkage rate in a machine direction (MD) of less than 5%, and a thermal shrinkage rate in a transverse direction (TD) of less than 1%, and has a powder shedding rate of less than 0.5%; and the coating layer has a thickness of 1-4 µm.

2. The composite coated separator according to claim 1, wherein the substrate film has a thickness of 4-20 µm, a Gurley gas permeability value of 50-500s/100cc, and a porosity of 40-55%.

3. The composite coated separator according to claim 1, wherein the inorganic filler is at least one selected from a ceramic material, a nanowire material or a nanotube material;
the ceramic material is one or more selected from Al₂O₃, SiO₂, TiO₂, ZrO₂, BaTiO₃, MgO, CaO, AlOOH, and SiC;
the nanowire material is one or more selected from carbon nanowires, attapulgite, silver nanowires, boron carbide nanowires, nanocellulose, copper hydroxide nanowires, silicon monoxide nanowires and hydroxyapatite nanowires;
the nanotube material is one or more selected from carbon nanotubes, silver nanotubes, boron carbide nanotubes, copper hydroxide nanotubes, silicon monoxide nanotubes, and hydroxyapatite nanotubes.

4. The composite coated separator according to claim 1, wherein the inorganic filler is inorganic particles having hydroxyl functional groups on the surface; and the inorganic filler has a particle diameter of 0.01-0.5 µm.

5. The composite coated separator according to claim 1, wherein a slurry for forming the coating layer comprises an aramid dope and the inorganic filler, and the aramid dope has a rotary viscosity of 2000-4000 mPa·s.

6. The composite coated separator according to claim 5, wherein the slurry for forming the coating layer has a solid content of 4-5 wt%; and the aramid dope comprises at least one selected from poly(m-phenylene isophthalamide) and poly(p-phenylene terephthalamide), and a solvent, the solvent being N-methylpyrrolidone.

7. The composite coated separator according to claim 5, wherein the aramid dope further comprises an auxiliary agent, the auxiliary agent is one or more selected from CaCl₂, KOH, LiCl and pyridine, and the mass content of the auxiliary agent in the aramid dope is 10% or less.

8. A method for preparing the composite coated separator according to claim 1, comprising the steps of:
blending an inorganic filler with an organic solvent, performing first high-speed dispersion, then mixing the dispersed mixture with an aramid dope, and performing second high-speed dispersion to obtain a slurry for forming a coating layer, wherein the aramid dope has a rotary viscosity of 2000-4000 mPa·s, the slurry for forming the coating layer has a solid content of 4-5 wt%, and the first high-speed dispersion is performed at a rotational speed of 6500-10000 r/min for 10-60 min; and the second high-speed dispersion is performed at a rotational speed of 6500-10000 r/min for 10-60 min, and the rotational speed of the first high-speed dispersion is the same as the rotational speed of the second high-speed dispersion; and coating one surface or both surfaces of a substrate film with the slurry to obtain the composite coated separator.

9. The method for preparing the composite coated separator according to claim 8, wherein the organic solvent is N-methylpyrrolidone.

10. A lithium-ion battery, comprising the composite coated separator according to claim 1.
